Europäisches Patentamt

European Patent Office

Office européen des brevets

(11) Publication number: **0 015 730**
**B1**

# EUROPEAN PATENT SPECIFICATION

(45) Date of publication of patent specification: **27.12.84**

(21) Application number: **80300612.1**

(22) Date of filing: **29.02.80**

(51) Int. Cl.³: **H 04 L 3/00, H 04 L 25/49, H 04 L 5/14**

(54) **A data transmission system, and a method of passing data through a data transmission system.**

(30) Priority: **02.03.79 JP 24257/79**

(43) Date of publication of application:
**17.09.80 Bulletin 80/19**

(45) Publication of the grant of the patent:
**27.12.84 Bulletin 84/52**

(84) Designated Contracting States:
**DE FR GB NL SE**

(56) References cited:
GB-A- 777 195
GB-A-2 005 965
GB-A-2 016 183
US-A-3 633 168
US-A-4 007 449

PATENT ABSTRACTS OF JAPAN, vol. 1, July 22, 1977, no. 145, page 1216 E 77
IBM TECHNICAL DISCLOSURE BULLETIN, vol. 18, no. 1, June 1975, New York, USA, R.A. DONNAN "Code independent message framing format", page 211 to 212
IBM TECHNICAL DISCLOSURE BULLETIN, vol. 18, no. 1, June 1975, New York, USA, R.A. DONNAN: "Idle fill for a code independent line control", pages 209,210
ELECTRONIC LETTERS, vol. 1, no. 3, May 1965, London, GB, R.O. CARTER "Low disparitiy binary coding system", pages 67,68

(73) Proprietor: **Nippon Telegraph and Telephone Public Corporation**
**1-6 Uchisaiwai-cho 1-chome Chiyoda-ku Tokyo 100 (JP)**

(73) Proprietor: **FUJITSU LIMITED**
**1015, Kamikodanaka Nakahara-ku Kawasaki-shi Kanagawa 211 (JP)**

(72) Inventor: **Fujimura, Noriaki**
**24-3, Matsubara 4-chome Setagaya-ku Tokyo 156 (JP)**
Inventor: **Kinoshita, Tsuneo**
**998-2, Oshidate Inagi-shi Tokyo 192-02 (JP)**
Inventor: **Aono, Tadashi**
**619, Nakamaruko Nakahara-ku Kawasaki-shi Kanagawa 211 (JP)**
Inventor: **Kaku, Takashi**
**488, Takaishi Tama-ku Kawasaki-shi Kanagawa 215 (JP)**
Inventor: **Tanaka, Yasuya**
**Fujitsu Nakanoshima-Ryo No. 2 371 Nakanoshima Tama-Ku Kawasaki-Shi Kanagawa, 214 (JP)**

(74) Representative: **Bedggood, Guy Stuart et al Haseltine Lake & Co. Hazlitt House 28 Southampton Buildings Chancery Lane London WC2A 1AT (GB)**

**Description**

For the sending of data from a transmitter to a receiver it is general practice to use a data transmission system wherein a carrier is modulated by the data being sent.

Such a data transmission system involves the use of transmitting terminal equipment, a modulator, a demodulator and receiving terminal equipment, in a configuration such that the transmitting terminal equipment is connected to the modulator, whilst the receiving terminal equipment is connected to the demodulator, and the modulator and demodulator are connected by a data transmission line, for example a telephone line.

Signal sending and receiving conventions observed by the transmitting and receiving terminal equipments in such a data transmission system are commonly those specified in the CCITT (The International Telegraph and Telephone Consultative Committee) Recommendation V. 29.

According to this recommendation, when the transmitting terminal equipment issues a transmission request signal to the modulator (indicating that it desires to send data), the demodulator should provide, in response to such request signal, a carrier detection signal which indicates to the receiving terminal equipment that data is to be sent from the transmitter to that receiving terminal equipment.

In general, a demodulator has had carrier detection means which provides an output carrier detection signal in accordance with the presence of a carrier extracted in the demodulator from a received signal.

On the other hand, it is proposed that a data transmission system should always be in a condition in which carrier is being transmitted. In this case the data transmission, system is required to discriminate accurately, in the presence of a continuous carrier, between periods in which there exists useful data corresponding to predetermined information which must be transmitted to the receiving terminal equipment from the transmitting terminal equipment and periods where such data does not exist. Previously, however, a data transmission system has only detected presence of carrier signal and therefore has a disadvantage in that discrimination of effective data periods when useful data to be transmitted exists is not possible with a continuously present carrier.

IBM Technical Disclosure Bulletin, Vol. 18, No. 1, June 1975, discloses a line control with idle time fill by inserting a special idle character. Steps are taken to prevent the special idle character from occurring inadvertently across character boundaries within received message information. These steps involve the insertion of a bit in message information, before transmission, when the special idle character inadvertently occurs, to suppress that character. Upon reception the receiver deletes the inserted bit from received message information.

US—A 3 633 168 discloses the selective alteration of chance data resembling control characters into non-control characters when in a transmit mode. Such a chance character is altered by masking and bit insertion.

According to one aspect of the present invention there is provided a data transmission system, including

a transmitter comprising transmitting terminal equipment operable to generate sending data, consisting of a series of data bits comprising a succession of words, and operable to generate a sending request signal for indicating that effective sending data is to be sent, and a modulator for modulating the sending data onto a carrier for transmission when the sending request signal indicates that effective data is to be sent, and

a receiver, arranged to receive transmissions from the transmitter, comprising a demodulator operable to demodulate such transmissions to provide demodulated data corresponding to the sending data,

characterised in that the transmitter is operable continuously to send the said carrier irrespective of whether or not effective data is to be sent from the transmitter to the receiver, and includes a transmission code converter operable in temporal coincidence with the moment of initial development of the sending request signal for inverting the polarity of a data bit, and operable upon effective data throughout a period over which effective data is to be sent to effect a code conversion of specific data bit sequences to converted data bit sequences, by inverting the value of a data bit which follows in such a specific data bit sequence immediately after a preselected number of consecutive data bits all of one given value, whenever such specific bit sequences occur in the effective data, prior to sending of the effective data, and

in that the receiver includes a detector operable, in relation to received demodulated transmissions, to detect such inversions to provide a detection signal indicative that effective data is to be received, and a receiving code converter operable to restore the converted data bit sequences to the specific data bit sequences from which they were derived, when the detection signal is provided.

According to another aspect of the present invention there is provided a method of passing data through a data transmission system having a transmitter comprising transmitting terminal equipment operable to generate sending data, consisting of a series of data bits comprising a succession of words, and operable to generate a sending request signal for indicating that effective sending data is to be sent, and a modulator for modulating the sending data onto a carrier for transmission when the sending request signal indicates that effective data is to be sent, and a receiver, arranged to receive transmissions from the transmitter, comprising a demodulator operable to demodulate such transmissions to provide demodulated data corresponding to the sending data,

The method being characterised in that:

the transmitter continuously sends the carrier irrespective of whether or not effective data is to be sent from the transmitter to the receiver,

in temporal coincidence with the moment of initial development of the sending request signal the polarity of a data bit to be sent is inverted,

throughout a period over which effective data is to be sent a code conversion of specific data bit sequences is effected, to convert specific data bit sequences to converted data bit sequences, by inverting the value of a data bit which follows in such a specific data bit sequence immediately after a preselected number of consecutive data bits all of one given value, whenever such specific data bit sequences occur in the effective data, prior to sending of the effective data, and in that:

upon reception, such inversions are detected in received demodulated data, to determine that effective data is to be received, and

converted data bit sequences are restored to the specific data bit sequences from which they were derived, when the detection signal is to be received.

Embodiments of the two aspects of this invention can provide for effective discrimination between periods wherein useful data to be transmitted exists and periods wherein such data does not exist.

Such discrimination can be effected without decreasing the number of data patterns available for use between transmitting terminal equipment and receiving terminal equipment.

In embodiments of this invention an encoding procedure can be provided which can effectively prevent occurrence of errors in discrimination between periods wherein useful data to be transmitted exists and periods wherein such data does not exist.

A system embodying this invention can have a plurality of transmitting terminal equipments, and a plurality of receiving terminal equipments, between which data can be passed along a line, from respective transmitting terminal equipments to respective receiving terminal equipments, by a time division method. The system can provide for the discrimination of periods in which useful data exists for each receiving terminal equipment. Data from all the transmitting terminal equipments is sent through one modulator to the line, and is received by one demodulator which distributes the data as appropriate, through receiving ports to each of the receiving terminal equipments.

Reference will now be made, by way of example, to the accompanying drawings, in which:—

Figure 1 is a synoptic block diagram illustrating the general configuration of a data transmission system for assistance in explaining a previous proposal and for assistance in explaining the present invention;

Figure 2 is a time chart for assistance in understanding timing of operations employed in a data transmission system embodying this invention;

Figure 3 is a block diagram illustrating the general configuration of a data transmission system embodying the present invention;

Figures 3A and 3B are respective block diagrams illustrating in more detail respective parts of the system of Fig. 3;

Figure 4 is a block diagram illustrating the general configuration of another data transmission system embodying the present invention;

Figure 5 is a schematic diagram for assistance in understanding an encoding procedure employed in an embodiment of this invention. invention.

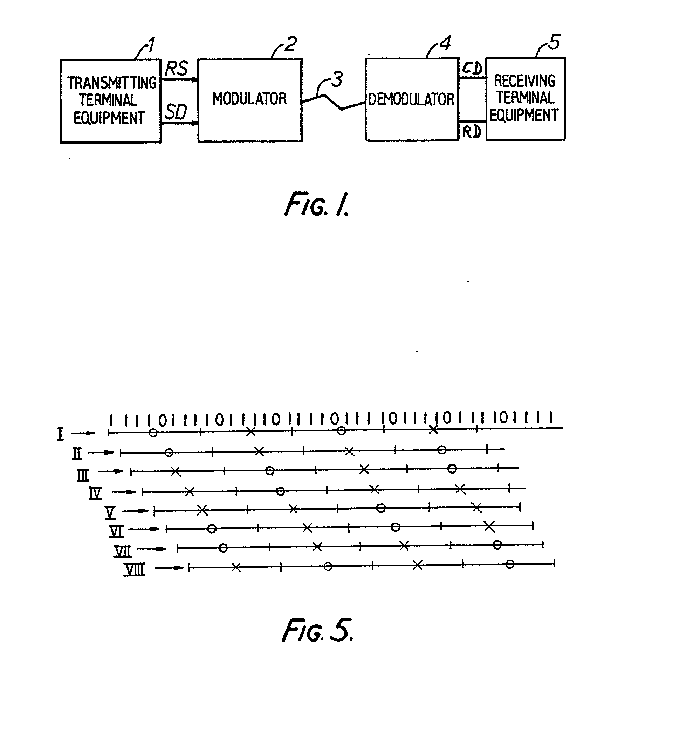

From Figure 1 it will be seen that a data transmission system includes transmitting terminal equipment 1, a modulator 2, a data transmission (e.g. telephone) line 3, a demodulator 4, and receiving terminal equipment 5.

It has been normal practice for the transmitting terminal equipment 1 to send signals to the modulator 2 via a sending request signal line RS and sending data line SD. According to a rule governing interactions between the transmitting terminal equipment 1 and the modulator 2, the transmitting terminal equipment 1 supplies mark polarity data (equivalent to data of level "1") to the sending data line SD when there is no information to be sent from the transmitting terminal equipment to the receiving terminal equipment 5. (At this time the transmitting terminal equipment also supplies a "0" level to sending request signal line RS). When information to be given and a data pattern to be sent are determined in the transmitting terminal equipment 1, transmitting terminal equipment 1 changes the sending request signal line RS from the "0" level (earth level, for example), to a "1" level (+12 volts or 5 volts, for example). In response, in a previous data transmission system, the modulator 2 modulates carrier with the mark polarity data and data including the data pattern to be sent and then sends the carrier to the line 3. The demodulator 4 first detects the carrier of a signal received from line 3 and informs the receiving terminal equipment 5 that there is incoming data by changing the level of a carrier detection signal line CD from a "0" level to a "1" level. In addition, the demodulator 4 regenerates the transmitted data from the received signal and sends it to the receiving terminal equipment 5 via a receiving data line RD.

In such a previous system as has been described with reference to Figure 1, when carrier is being received neither the demodulator at the receiving side nor the receiving terminal equipment can discriminate between periods when effective useful data exists and other periods.

In a system embodying this invention, periods wherein effective data exists are made known to the receiver by the expedient of converting data input to the modulator for such periods into specified formate. It is then sufficient to provide in the system, for discrimination of periods when effective data exists, a data converter, a decoder and a circuit for detecting data conversion. This means that there is no requirement to use a particular code for discriminating effective data and neither is it required to reduce the number of kinds of data patterns that can be used to pass information in the system. For example it is not necessary to inhibit the use of a particular data pattern for sending information from the transmitting terminal equipment because that pattern is used as a code for discriminating effective data.

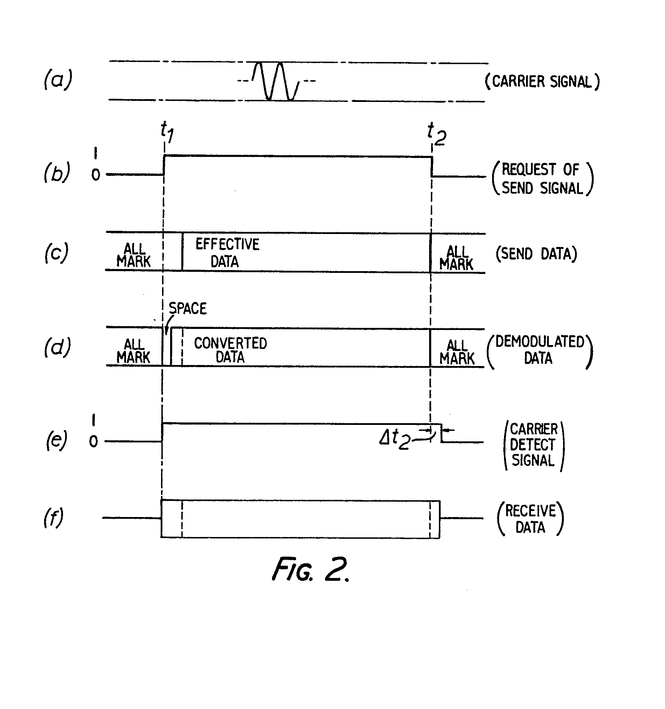

The present invention will now be explained in more detail with reference to the time chart of Figure 2 and the general system configuration of Figure 1.

In the time chart of Figure 2, waveform (a) illustrates a carrier as mentioned above, waveform (b) illustrates the sending request signal mentioned above, waveform (c) illustrates sending data to be supplied to the modulator, waveform (d) illustrates data demodulated by the demodulator, waveform (e) illustrates a detection signal indicating an effective data sending period, and waveform (f) illustrates received data which the receiving terminal equipment obtains from the demodulator.

Certain conditions which can obtain in a data transmission system embodying this invention will now be described with reference to Figure 2.

Condition 1:— when the sending request signal of waveform (b) is at a level "0";

When the sending request signal is at the level "0", the transmitting terminal equipment is not requesting signal sending. In a system embodying this invention the modulator modulates the carrier with a continuous mark signal (All Mark) which is continuously supplied from the transmitting terminal station to the sending data signal line SD during this period and sends the modulated carrier along the line (e.g. telephone line) 3 of Figure 1.

At this time, the demodulator on the receiving side of the system embodying this invention demodulates only the continuous mark signal and sends a detection signal to the receiving terminal equipment at a level "0". In the system of this invention this detection signal takes the place of the carrier detection signal of the previous system mentioned above and, for convenience, may still be referred to as a "carrier detection signal".

Condition 2: when the sending request signal of waveform (b) is at a level "1";

When the sending request signal is at level "1", the transmitting terminal equipment is requesting signal sending. In response the modulator encodes data (see waveform (c)), being supplied from the transmitting terminal equipment via line SD in accordance with rules A, B as explained below, after the rise time $t_1$ at which the sending request signal rises to level "1".

A: Bit data of mark polarity is inverted to bit data of space polarity at the rise time $t_1$ of the sending request signal.
B: When bit data of mark polarity is supplied continuously as data to be sent for a predetermined number (n) of consecutive bits following a last preceding bit of space polarity, the data bit in the bit location next after that $n$th bit following the last output data bit of space polarity is converted to space polarity. Thus, when there occurs a data sequence including a space polarity bit, followed by $n$ consecutive mark polarity bits and a further consecutive bit, the further consecutive bit is inverted in polarity to provide a converted data sequence.

The modulator modulates the carrier of waveform (a) with the data as illustrated in waveform (d) which has been subjected to the abovementioned conversion in accordance with A and B and sends the carrier so modulated to the line. The data as illustrated in (d) is demodulated from the carrier at the receiving side.

On the demodulator side means are provided for detecting and decoding the data of waveform (d) consistent with rules A, B as will be explained later.

The data bit of space polarity (provided in accordance with rule A) is detected in the demodulated data, and the detection signal (i.e. the carrier detection signal) of waveform (e) is to set level "1" consistently with the said rule A.

Simultaneously, the relevant data bit of space polarity is encoded (re-inverted) to mark polarity and sent to the receiving terminal equipment.

Succeedingly, in correspondence with the above rule B it is detected when a data sequence occurs which comprises bit data of mark polarity continuing for said specified number $n$ of consecutive bits, immediately after a bit data of space polarity, and a further consecutive bit, and the polarity of the further consecutive data bit (the (n+1)th) is converted (inverted). The resulting converted data (f) is sent to the receiving terminal.

Condition 3: when the sending request signal of waveform (b) changes from level "1" to level "0" at time $t_2$:

The modulator shifts to Condition 1 mentioned above, from Condition 2 mentioned above, at timing $t_2$. Thus, bit data of mark polarity is demodulated by the demodulator in the period after time $t_2$.

The demodulator changes the level of carrier detection signal (e) from "0" to "1" at a delay $\Delta t_2$ after $t_2$, for example corresponding to a period in which bit data of mark polarity has continued for a predetermined number of bits, for example 48 bits.

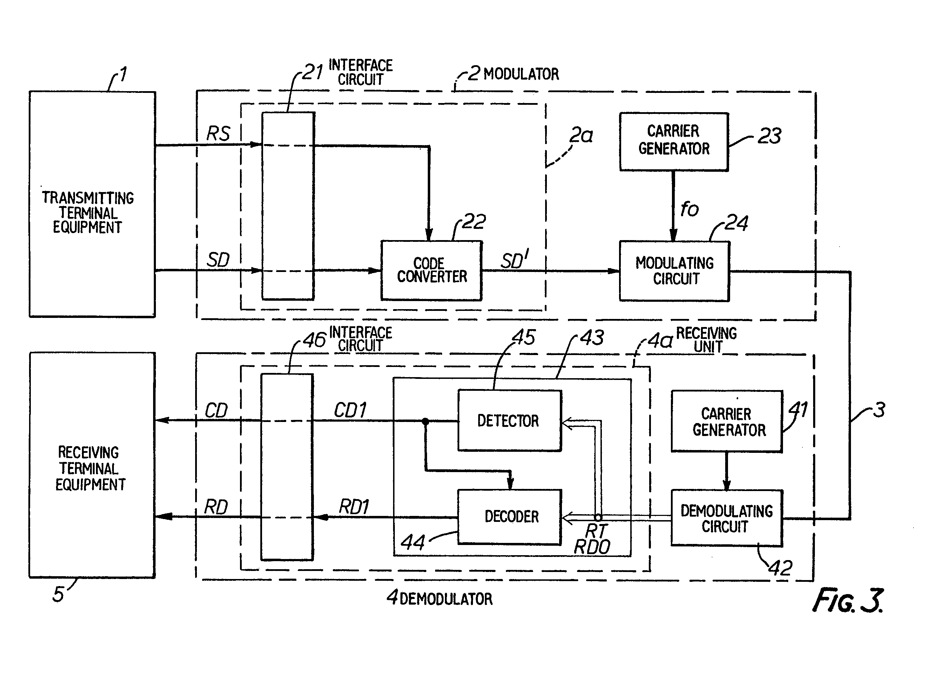

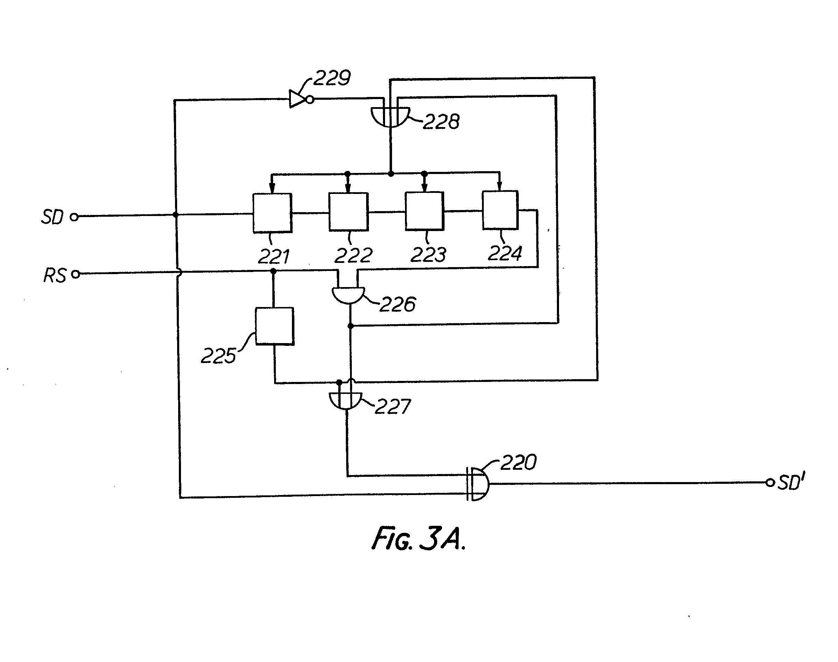

In the block diagram of Fig. 3, blocks corresponding to integers of the apparatus having the same general functions as integers in Fig. 1 are given the same reference numerals as are used in Figure 1.

In Figure 3, 21 is an interface circuit; 22 is a sending code converter; 23 is a carrier generator used for modulation; 24 is a modulating circuit; 41 is a carrier generator used for demodulation; 42 is a demodulating circuit; 43 is a receiving unit; 45 is a detector; 44 is a decoder; and 46 is an interface circuit.

The interface circuits 21 and 46 are respectively connected with plurality of interface signal lines in accordance with the above mentioned CCITT (The International Telegraph and Telephone Consultative Committee) Recommendation V 29. Of those interface signal lines Figure 3 shows only sending request signal line RS, sending data signal line SD, carrier detection signal line CD and receiving data signal line RD.

Operations in a data transmission system embodying this invention will be explained by reference to Fig. 3.

Sending request signal line RS and sending data signal line SD are connected to the sending code converter 22 via the interface circuit 21.

The sending code converter 22 carries out code conversion for signals supplied to the sending data signal line SD from the terminal equipment 1 in dependence upon the signal level supplied to the sending request signal line RS, and outputs converted sending data signals along an output line SD'.

Figure 3A shows in detail a possible configuration of the sending code converter 22.

In Fig. 3A, 221, 222, 223, 224 are respective 1-bit registers, together forming a shift register by series connection. 225 is a differentiation circuit; 226 is an AND gate; 227, 228 are OR gates; 229 is an inverter; and 220 is an exclusive OR gate.

Operations of the code converter of Fig. 3A will now be explained.

1: Operation when the sending request signal line RS is at a level "0".

An output from the AND gate 226 is at a level "0" and an output of the differentiation circuit 225 is brought to a level "0".

Thereby output of the OR gate 227 is brought to level "0", allowing the exclusive OR gate 220 to operate simply as an OR gate.

Hence, mark polarity data on the sending data signal line SD is output directly onto output line SD'.

2: Operation when the sending request signal line RS changes from a level "0" to a level "1".

The differentiation circuit 225 provides an output pulse of a level "1" when the level of the sending request signal line RS changes from "0" to "1".

Thereby, mark polarity data is inverted to space polarity data by exclusive OR gate 220.

At this time, the 1-bit registers 221, 222, 223, 224 are cleared and placed in a level "0" condition by the pulse output of differentiation circuit 225 supplied to the registers via OR gate 228.

Simultaneously with setting of the sending request signal line RS to the level "1", AND gate 226 is set in the open state.

Thus, the sending code converter 22 executes processing in accordance with aforementioned rule A.

3: Operation when mark polarity data appears continuously on the sending data signal line SD and when the sending request signal line RS is at a level "1".

The mark polarity data is supplied bit by bit to the register 221 and is sequentially shifted through the registers 222, 223, 224. On the other hand, the sending data is also concurrently input to exclusive OR gate 220 and inverter 229. The inverter 229 output is at a level "1" when space polarity data is fed to its input and this clears registers 221, 222, 223, 224 via the OR gate 228. Conversely, inverter 229 output is at a "0" level when mark polarity data is fed to its input, and the registers are not cleared by such mark polarity data.

Therefore, an output of level "1" cannot be obtained from the register 224 forming the final shift register stage unless mark polarity data is supplied as sending data continuously for at least 4 bits. Namely, whilst 4 bits of mark polarity data are being shifted into the registers 221, 222, 223, 224, this sending data is output unchanged to the output line SD' via the exclusive OR gate 220. When 4 consecutive bits of mark polarity data have been received from line SD, the output signal of the register 224 attains the level "1" and is supplied to exclusive OR gate 220 via AND gate 226 and OR gate 227. Thereby, exclusive OR gate 220 outputs 5th bit of sending data following the last space polarity data which cleared registers 221 to 224 after converting that 5th bit to space polarity if it was originally of mark polarity or after converting it to mark polarity if it was originally of space polarity.

Thus, this circuit 22 puts into effect the abovementioned rule B.

When 4 consecutive bits of mark polarity data have been received the output of AND gate 226 rises to "1". Thereby the registers 221 to 224 are reset via OR gate 228. If the mark polarity data continues for a further 4 consecutive bits after the 5th bit the next bit following the further four bits is again inverted, and so on.

Returning to Fig. 3.

As explained above, data which is code converted as explained only when the sending request signal line RS is at the level "1" is input to the modulating circuit 24.

On the other hand, the modulating circuit 24 always receives a signal of specified frequency from the carrier generator 23. The modulating circuit 24 is, for example, so structured that it can modulate the carrier in such a way that 16 kinds of data can be indicated in accordance with amplitude and phase of the carrier. Therefore, the modulating circuit 24 firstly separates the data output from the sending code converter 22 into 4-bit sections. Then, for each four-bit section the modulating circuit 24 modulates the carrier into a signal having phase and amplitude corresponding to the data pattern carried by the relevant four bits and sends that signal to the line 3.

The demodulating circuit 42 in the demodulator 4 receives a signal transmitted along the line 3. Moreover, the demodulating circuit 42 is supplied with a carrier, from carrier generator 41, which is similar to the carrier generated by the carrier generator 23 on the modulator side. The carrier generator 41 is adjusted by a carrier automatic phase controller, which is not illustrated, by well known means. On account of this adjustment, the carrier on the line can be equalized.

The demodulating circuit 42 discriminates the phase and amplitude of a received signal with reference to the standard carrier signal sent from the abovementioned carrier generator 41, and outputs along output line RDO a data signal the same as the data signal which passed along the sending data output line SD'.

Simultaneously, along an output line RT, the demodulator 42 outputs a receiving timing signal, namely timing pulses for discriminating data bits in the data output along line RDO. Signals on the two lines RDO and RT are supplied to the receiving unit 43 and input to detector 45, decoder 44, respectively.

When a space polarity data bit is found in the demodulated data, the detector 45 in the receiving unit 43 sets its carrier detection signal line CD1 to a level "1".

The decoder 44 decodes the demodulated data in dependence upon the level of the carrier detection signal line CD1.

Figure 3B shows in detail a possible configuration for the receiving unit 43. Blocks in Figure 3B corresponding to blocks in Fig. 3 are given the same reference numerals as in Fig. 3 and lines in Figure 3B corresponding to lines in Fig. 3 are given the same references as in Fig. 3.

In Fig. 3B, 441, 442, 443, 444 are respective 1-bit registers, forming a shift register by series connection. In Fig. 3B, 452 is a counter; 456 is a JK type flip-flop; 445, 454, 455, 457 are AND gates; 446, 447 are OR gates; 440 is an exclusive OR gate; and 451, 453 are inverters.

Operation of the receiving unit of Fig. 3B will now be explained.

1. Operation when the demodulated data is all mark polarity data.

AND gate 454 of detector 45 is opened by demodulated mark polarity data on line RDO. In addition, AND gates 455, 457 are closed via the inverters 453, 451. Thereby for each mark polarity data bit on line RDO a timing pulse on receiving timing signal line RT is supplied to a counter terminal C of the counter 452 via the AND gate 454. The counter 454 counts the number of consecutive mark polarity data bits which occur by counting the number of timing pulses which are supplied to terminal C.

When the counter 452 reaches a specified count value, for example, 48, corresponding to 48 consecutive mark polarity data bits, it provides an output signal of level "1" along a line CR. This output signal is input to the terminal K of the JK flip-flop 456 for resetting that flip-flop. Thus, the $\overline{Q}$ output of flip-flop 456 is brought to level "1", whilst the Q output is brought to level "0".

Thereby, the level of carrier detection signal line CD1 is set to "0" when mark polarity data has continued for 48 consecutive bits. When the Q output of flip-flop 456 is brought to "0", AND gate 445 of decoder 44 is closed. Thereby, AND gate 445 has an output of the level "0". As explained above, AND gate 457 is also closed, keeping its output at level "0".

Thus; one input terminal of exclusive OR gate 440 is set to level "0", and data on the demodulation data line RDO is transmitted unaltered to the line RD1.

2. Operation in response to demodulated data having a space polarity data bit in accordance with the rule A:

The AND gates 455, 457 are opened by the space polarity data bit which is inverted to level "1" by the inverters 453, 451.

On the other hand, the flip-flop 456 makes effective an input of terminal K with the timing pulse next to that where the counter 452 is reset as will be explained later and the counter 452 keeps the line CR at the level "0".

The $\overline{Q}$ output of flip-flop 456 is at level "1" when this space polarity data bit appears. The result is that the space polarity data bit is inverted by the inverter 451, and the AND gate 457 is opened, so that during the period when a signal of level "1" is supplied to the AND gate 457 from the $\overline{Q}$ output of 456 the output of the AND gate 457 is a signal of level "1".

Via OR gate 446 the signal of level "1" from AND gate 457 causes the exclusive OR gate 440 to invert space polarity data bit to mark polarity and output that mark polarity data bit along line RD1.

The AND gate 454 is closed and AND gate 455 is opened in response to a space polarity data bit on line RDO, and then a timing pulse from line RT is input, via 455, to terminal R of counter 452 for resetting the counter. After reset the counter keeps line CR at level "0". This results in the Q output of flip flop 456 going to "1".

Thus, the receiving unit 43 carries out a decoding operation corresponding to coding as prescribed by abovementioned rule A.

3. Operation after a space polarity data bit has been detected.

The Q output of flip-flop 456 is set to level "1" by space polarity data bit. Thereby, AND gate 445 is opened. Moreover, the registers 441, 442, 443, 444 are reset by an output signal of level "1" from inverter 451, through OR gate 447.

4. Operation when mark polarity data is received for four consecutive bits after a space polarity bit has been detected.

The four mark polarity data bits are sequentially shifted, in accordance with receiving timing (by means of timing pulses supplied to the registers from line RT), through registers 441, 442, 443 and 444. When a mark polarity data bit has been shifted through to register 444, an output signal of level "1" from the register 444 causes the polarity of a 5th data bit (i.e. the bit immediately following the four bits shifted into the registers) to be inverted by action of exclusive OR gate 440 controlled via AND gate 445 and OR gate 446.

Thereby the receiving unit 43 executes a decoding operation corresponding to coding as prescribed by abovementioned rule B.

The output signal of level "1" from 445 clears registers 441 to 444 through OR gate 447. If a further four consecutive mark polarity data bits are received after the 5th bit the next bit following the further four bits is inverted, and so on.

5. Operation in a period in which space polarity data does not exist, following a period when such data does exist.

In a period when only mark polarity data exists the transmitting terminal equipment has set the sending request signal line RS to the level "0" as explained previously; namely it does not require data transmission.

The number of consecutively received bits of mark polarity data are counted by the counter 452 as mentioned previously. When only mark polarity data is received counter 452 is never reset, therefore in a period when only mark polarity data exists, the counter 452 is never reset by space polarity data. Thus the counter 452 counts, for example, 48 consecutive bits of mark polarity and then supplies an output signal of level "1" to the output line CR.

Thereby, the flip-flop 456 is reset and its Q output is then kept at level "0".

Thus, the signal level of the carrier detection signal supplied line CD1 is changed from "1" to "0".

Returning now to Figure 3, as explained above, the receiving unit 43 outputs signals in dependence upon the signals appearing on sending request signal line RS and sending data signal line SD from the transmitting terminal equipment 1 to carrier detection signal line CD1 and data signal line RD1.

Interface circuit 46 sends the signals on lines CD1 and RD1 to the receiving terminal equipment 5 via lines CD and RD.

In the manner explained in detail above, periods when data to be sent exists are made known to the receiving side from the transmitting side.

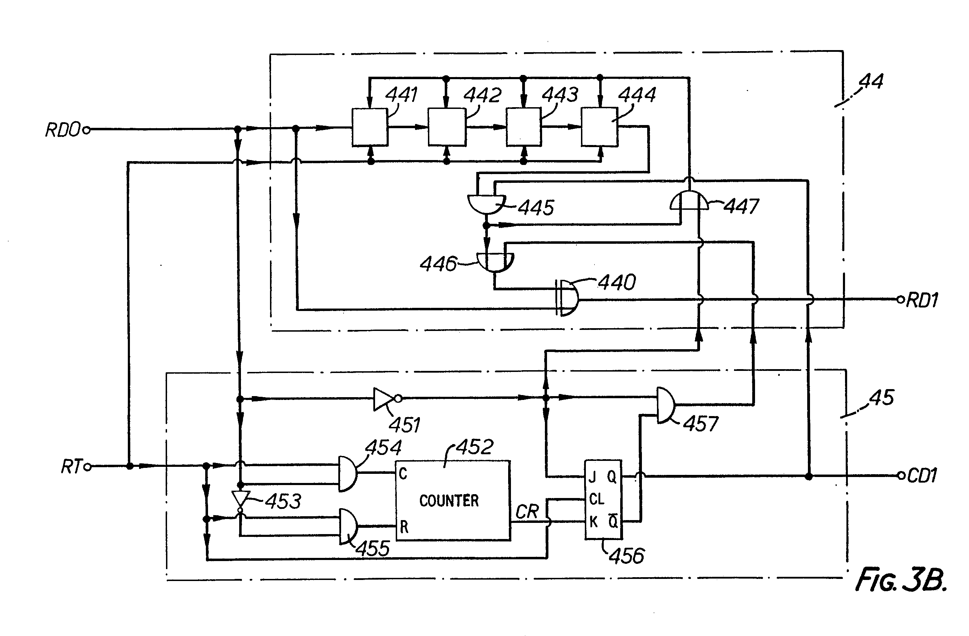

Another embodiment of this invention will now be described with reference to Figure 4.

Figure 4 shows a block diagram of the system for realizing data transmission between a plurality of transmitting terminal equipments and a corresponding plurality of receiving terminal equipments on a time division multiplex basis.

In Figure 4, 11 to 14 are transmitting terminals; 2A1 to 2A4 are input ports; 25 and 47 are multiplexers; 4A1 to 4A4 are output ports; 51 to 54 are receiving terminals.

Each of the input ports 2A1 to 2A4 has a structure the same as that of part 2a indicated by a broken line rectangle in Figure 3. Thus each input port includes an interface circuit and a code converter operable as described above. Detailed explanation of the input ports will therefore be omitted. In addition, each of the output ports 4A1 to 4A4 has a structure same as that of part 4a indicated by a broken line rectangle in Fig. 3. Thus each output port includes a detector and a decoder operable as described above. Detailed explanation of the output ports will therefore be omitted.

In the apparatus of Fig. 4, the transmission rate of each port is, for example, 2400 BPS and transmission on the line 3 may be effected at a rate of, for example, 9600 BPS.

Each of the transmitting terminals 11 to 14 has sending data and sending request signal lines, as provided for the transmission terminal equipment 1 of Figure 3, connected to the corresponding input port 2A1 to 2A4.

The sending data signal lines are shown as 1SD to 4SD in Fig. 4 and the sending request signal lines are shown as 1RS to 4RS in Fig. 4.

The receiving terminals 51 to 54 have receiving data lines (1RD to 4RD) and carrier detection signal lines (1CD to 4CD), as provided for the receiving terminal equipment 5 of Figure 3, connected to the corresponding output ports 4A1 to 4A4.

The multiplexer 25 in the modulator 2 of Figure 4 multiplexes data #1SD, #2SD, #3SD, #4SD which is supplied to each port 2A1 to 2A4 from terminals 11 to 14 via sending data lines 1SD, 2SD, 3SD, 4SD. The modulator 24 modulates the multiplexed data at the rate, for example, of 9600 BPS and sends it to the line 3. The demodulating circuit 42 in the demodulator 4 on the receiving side regenerates received data and develops receiving timing pulses from the signal received from line 3 as explained previously. The data is sent along a line RD to multiplexer 47 and receiving timing pulses are sent along a line RT to multiplexer 47. The multiplexer (demultiplexer) 47 distributes data and receiving timing pulses to the ports 4A1 to 4A4 by counting the receiving timing pulses. Each port 4A1 to 4A4 receives data along a line corresponding to line RDO of Figure 3 and receives timing pulses along a line corresponding to line RT of Figure 3.

When the data sent from a transmission terminal is effective sending data (i.e. useful data not continuous mark data, as described above) the regenerated received data sent to the corresponding port 4A1 to 4A4 has been subjected to inversion of bits as compared with the original sending data from the transmission terminal concerned. The inversion is effected in the port 2A1 to 2A4 concerned, so long as a sending request signal is supplied to that port 2A1 to 2A4 from the corresponding transmission terminal. If such a sending request signal is not being supplied, the distributed received data is all of mark polarity.

Moreover, timing pulses for respective ports 4A1 to 4A4, to be supplied to receiving timing signal lines RT for those ports, are only those timing pulses corresponding to the distributed receiving data for those respective ports.

Therefore, in accordance with the timing pulses supplied to the port concerned, the level of the carrier detection signal line going from the port to the receiving terminal corresponding to the port changes in accordance with changes in level of the sending request signal line of the relevant remote transmitting terminal.

In the embodiments of this invention described above, upon demodulation the level of the signal (carrier detection signal) indicating whether a data sending period is or is not an effective data sending period is changed to "0", from "1", when receiving data of continuous mark polarity continues for a predetermined number, for example, forty eight bits or more. By these means the receiving side recognizes a change of value of a sending request signal on the transmitting side.

It is necessary, therefore, to guarantee that there is no chance that receiving data containing forty eight or more continuous bits of mark polarity can arise as part of useful sending data during a period when the sending request signal on the transmitting side exists at a level indicating an effective data sending period, even if an error including bit inversion is contained in the receiving data for any reason.

The sending code converter 22 in Fig. 3 is provided to give the necessary guarantee by carrying out bit inversion of sending data bits, i.e. every fifth bit of mark polarity data, for example, is inverted before transmission so long as the level of the sending request signal is "1".

In addition, sending data is, so long as it is effective data, in a format composed of data words each containing seven bits of data and one parity bit.

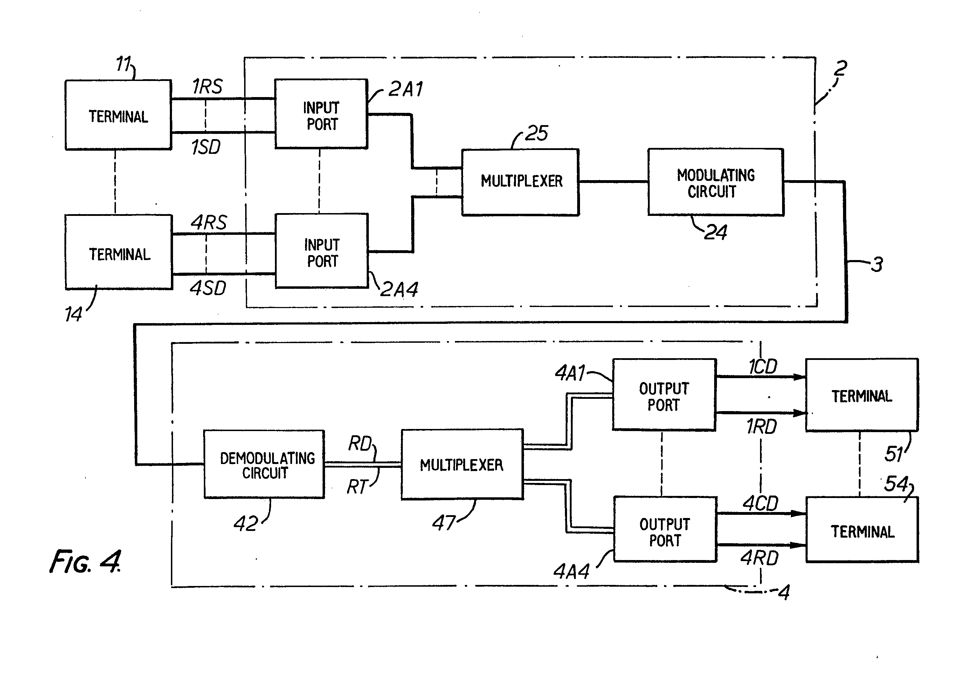

In the presence of code converter 22, theoretically, when effective sending data has a pattern as indicated at the top of Fig. 5, and when a sending request signal also exists (i.e. is at a "1" level), sending data after conversion as explained above is of continuous mark polarity. This could result in the carrier detection signal erroneously changing to level "0" on the receiving side of the data transmission system.

However, as explained above, such effective sending data comprises data bits and, for example, parity bits generated on an odd parity basis (generation on an even parity basis is also allowable), organised in units (words) of 8 bits. From this fact, it can be understood that theoretical sending data as shown at the top of Figure 5 involves a contradiction of parity bit values. Chart levels I to VII in Figure 5 represent respectively the eight different phases in which the sending data at the top of Figure 5 could be taken and divided into 8-bit words. For any phase a parity bit contradiction will arise within 48 bits of data. Thereby, in practice, so long as the sending data is effective data, it should never have a pattern as shown at the top of Fig. 5 and it is therefore very rare for the carrier detection signal to change erroneously to level "0" on the receiving side.

For example, when the transmission rate of sending data is 2400 BPS and a timer for counting the mark polarity data in the demodulator on the receiving side has to detect continuous mark bits for more than 48 consecutive bits before the carrier detection signal changes from level "1" to level "0", the probability of erroneous detection of forty eight consecutive bits of all mark data is such that this event should occur once in every $2^{48} \times 48/2400$ (sec), considering the sending data as random data and taking the number of times that sequences of forty-eight bits can be received during a second as 2400/48. Such a probability means that such an error occurs once in about every $6 \times 10^5$ years and therefore the risk of carrier erroneously being dropped is almost perfectly eliminated.

In the above described embodiments of this invention, the detection of 48 consecutive mark polarity bits is used on the receiving side to determine when an effective data sending period has ended. On the basis that effective data consists of eight bit words, each word of seven data bits and one parity bit, and that bit inversion is carried out on the transmitting side after every sequence of four mark polarity bits, parity considerations ensure that 48 consecutive mark polarity bits cannot (without error) be received on the receiving side as effective data.

It will be understood that bit inversion after every sequence of five mark polarity bits, on the transmitting side, would achieve the same effect.

If a larger word length is used, with less frequent bit inversions on the transmitting side, the number of consecutive mark polarity bits which would have to be received before a definite indication that an effective sending period has ended was given could need to be increased beyond forty eight.

In general, however, with words comprising $n$ (data and parity) bits, the inversion on the transmitting side of every $(p+1)$th bit $(p+1 < n)$ after $p(p < n)$ consecutive mark polarity bits will ensure a parity contradiction after a finite number of bits; preferably $(p+1)$ is less than the number of data bits in a word.

Effects which are achieved by employment of embodiments of this invention as explained above are itemized below.

(1) A period in which effective data is sent, as illustrated in Fig. 2, can be made known to the receiving side of data transmission apparatus by means of bit inversion in the sending data, as explained above.

(2) Since effective data sending periods are made known to the receiving side by means of code inversion of sending data as illustrated in Fig. 2, the use of particular data patterns for discrimination between effective data periods and non-effective data periods is not required.

(3) As explained with reference to Fig. 2, Fig. 3A, Fig. 3B, a first code polarity inversion is carried out on the sending side in synchronization with the rise of a sending request signal and this first polarity inversion is detected, and thereby the beginning of a data sending period is detected on the receiving side. Therefore, operations on the sending and receiving sides can be synchronized and the sending side and receiving side can operate with the same timing.

(4) As explained with reference to Fig. 3A, Fig. 3B, since polarity of a data bit is always inverted after a specified number of data bits having of the same polarity have occurred following the first polarity inversion according to item (3) above and this second polarity inversion condition can be detected on the receiving side even if the first polarity inversion condition was not detected, failure of detection of the rising part of a data sending period can be prevented.

(5) Since the falling (ending) of a data sending period is discriminated as explained in Fig. 3B by detecting a condition in which polarity inversion has not been carried out, by making use of a counter, namely by a time watching means, faulty discrimination due to sending of erroneous data during data sending period is so unlikely that in practice it may be said that it does not occur.

(6) Even in the system shown in Fig. 4 where a plurality of terminals can be interfaced to a single line by providing multiplexers in modulator units and demodulator units, data can be sent between transmitting terminal equipments and receiving terminal equipments and effective data sending periods can be discriminated at each receiving port (i.e. at each receiving terminal equipment) on the receiving side.

Thus there has been described a data transmission system wherein a transmitter continuously transmits a carrier to a receiver and modulates the carrier with sending data and wherein a receiver demodulates the data. In order to provide for discrimination as to whether data demodulated in the receiver is effective sending data or not, during an effective sending data period the transmitter converts the specified bits of the sending data and then transmits the converted data and the receiver discriminates effective sending data in dependence upon detection of such conversion in received data.

**Claims**

1. A data transmission system, including
a transmitter comprising transmitting terminal equipment (1) operable to generate sending data, consisting of a series of data bits comprising a succession of words, and operable to generate a sending request signal for indicating that effective sending data is to be sent, and a modulator (2) for modulating the sending data onto a carrier for transmission when the sending request signal indicates that effective data is to be sent, and
a receiver, arranged to receive transmissions from the transmitter, comprising a demodulator (4) operable to demodulate such transmissions to provide demodulated data corresponding to the sending data,
characterised in that the transmitter is operable continuously to send the said carrier irrespective of whether or not effective data is to be sent from the transmitter to the receiver, and includes a transmission code converter (22) operable in temporal coincidence with the moment of initial development of the sending request signal for inverting the polarity of a data bit, and operable upon effective data throughout a period over which effective data is to be sent to effect a code conversion of specific data bit sequences to converted data bit sequences, by inverting the value of a data bit which follows in such a specific data bit sequence immediately after a preselected number of consecutive data bits all of one given value, whenever such specific data bit sequences occur in the effective data, prior to sending of the effective data, and
in that the receiver includes a detector (44, 45) operable, in relation to received demodulated transmissions, to detect such inversions to provide a detection signal indicative that effective data is to be received, and a receiving code converter (44, 45) operable to restore the converted data bit sequences to the specific data bit sequences from which they were derived, when the detection signal is provided.

2. A system as claimed in claim 1, wherein the receiver includes a further detector (45, 452) operable to maintain a count of consecutive received data bits which are all of a given value, before restoration of original values of any inverted data bits, and to determine that effective data is no longer to be received if and when the count reaches a predetermined number indicating that all data bits received over a given period of time have been of the given value.

3. A system as claimed in claim 1 or 2, wherein the series of data bits comprises a succession of words each of $m$ bits, including $m$ data and parity bits, and wherein the said preselected number is less than $m$.

4. A system as claimed in claim 1, wherein the transmitter comprises a plurality of units (11, 14) each of which can be a source of data to be sent, a plurality of transmission code converters connected with respective source units and each operable upon effective data throughout a period over which effective data is to be sent from the source unit connected to the converter concerned to effect such code conversion of specific data bit sequences to converted data bit sequences whenever such specific data bit sequences occur in the effective data, prior to sending of the effective data, a multiplexer (25) for time division multiplexing data from the respective source units (11, 14), and a modulator (24) for modulating the carrier with multiplexed data from the multiplexer (25), and wherein the receiver comprises a demodulator (42) for demodulating received data from the carrier, distribution means (47) for demultiplexing received data from respective source units (11, 14), a plurality of detectors connected with the demultiplexer (47) for receiving data from respective source units (11, 14) and each operable, in relation to received demodulated and demultiplexed data from the source unit (11, 14) concerned to detect such code conversion to determine that effective data is to be received from the source unit (11, 14) concerned, a plurality of receiving code converters connected with the demultiplexer (47) for receiving data from respective source units (11, 14), each operable in respect of received demodulated and demultiplexed data from the source unit (11, 14) concerned to restore the converted data bit sequences to the specific data bit sequences from which they were derived, and a plurality of destination units (51, 54), each of which can be a destination for data, connected to receive restored data from respective source units (11, 14).

5. A method of passing data through a data transmission system having a transmitter comprising transmitting terminal equipment (1) operable to generate sending data, consisting of a series of data bits comprising a succession of words, and operable to generate a sending request signal for indicating that effective sending data is to be sent, and a modulator (2) for modulating the sending data onto a carrier for transmission when the sending request signal indicates that effective data is to be sent, and a receiver, arranged to receive transmissions from the transmitter, comprising a demodulator (4) operable to demodulate such transmissions to provide demodulated data corresponding to the sending data, the method being characterised in that:

the transmitter continuously sends the carrier irrespective of whether or not effective data is to be sent from the transmitter to the receiver,

in temporal coincidence with the moment of initial development of the sending request signal the polarity of a data bit to be sent is inverted,

throughout a period over which effective data is to be sent a code conversion of specific data bit sequences is effected, to convert specific data bit sequences to converted data bit sequences, by inverting the value of a data bit which follows in such a specific data bit sequence immediately after a preselected number of consecutive data bits all of one given value, whenever such specific data bit sequences occur in the effective data, prior to sending of the effective data, and in that:

upon reception, such inversions are detected in received demodulated data, to determine that effective data is to be received, and

converted data bit sequences are restored to the specific data bit sequences from which they were derived, when the detection signal is to be received.

**Patentansprüche**

1. Datenübertragungssystem mit

einem Sender, der eine Sendeendeinrichtung (1) umfaßt, die dazu dient, Daten zu senden, die aus einer Reihe von Datenbits bestehen, die eine Folge von Wörtern umfassen, und die dazu dient, ein Sendeanforderungssignal zu erzeugen, um anzuzeigen, daß effektive Sendedaten gesendet werden sollem,

und einem Modulator (2) zum Modulieren der Sendedaten auf einen Träger zur Übertragung, wenn das Sendeanforderungssignal anzeigt, daß effektive Daten gesendet werden sollen, und

einen Empfänger, der zum Empfang der Sendung von dem Sender eingerichtet ist und einen Demodulator (4) umfaßt, der dazu dient, solche Sendungen zu demodulieren, um demodulierte Daten zu liefern, die den Sendedaten entsprechen, dadurch gekennzeichnet,

daß der Sender ständig im Betrieb ist, um den genannten Träger zu senden, unabhängig davon, ob effektive Daten von dem Sender zu dem Empfänger gesendet werden sollen oder nicht, und daß er einen Sendecodekonverter (22) umfaßt, der in zeitlicher Koinzidenz mit dem Augenblick der anfänglichen Entwicklung des Sendeanforderungssignals arbeitet, um die Polarität eines Datenbits zu invertieren, und der aufgrund effektiver Daten während einer gesamten Periode in Betrieb ist, während welcher effektive Daten gesendet werden sollen, um eine Codeumwandlung von spezifischen Datenbitsequenzen in konvertierte Datenbitsequenzen zu bewirken, durch Invertierung des Wertes eines Datenbits, welches in solch einer spezifischen Datenbitsequenz unmittelbar nach einer vorausgewählten Anzahl von aufeinanderfolgenden Daten folgen, die alle einen vorbestimmten Wert haben, wann immer solche spezifischen Daten mit Sequenzen in den effektiven Daten auftreten, vor dem Senden der effektiven Daten,

und daß der Empfänger einen Detektor (44, 45) umfaßt, welcher in Relation zu empfangenen, demodulierten Übertragungen tätig wird, um derartige Inversionen festzustellen, um ein Empfangssignal zu liefern, welches anzeigt, daß effektive Daten empfangen werden sollen, und einen Empfangscodekonverter (44, 45), welcher tätig wird, um die konvertierten Datenbitsequenzen zu den spezifischen Datenbitsequenzen wieder herzustellen, von denen sie abgeleitet worden waren, wenn das Detektionssignal geliefert wird.

2. System nach Anspruch 1, bei welchem der Empfänger einen weiteren Detektor (45, 452) umfaßt, der tätig wird, um einen Zählstand von konsekutiv empfangenen Datenbits aufrecht zuerhalten, welche alle von einem vorgegebenen Wert sind, vor Weiderherstellung der ursprünglichen Werte irgendwelcher invertierter Datenbits, und um zu bestimmen, daß effektive Daten nicht länger empfangen werden sollen, falls und wenn der Zählstand eine vorbestimmte Zahl erreicht, welche anzeigt, daß alle empfangenen Datenbits während einer vorbestimmten Zeitperiode den vorbestimmten Wert haben.

3. System nach Anspruch 1 oder 2, bei welchem die Folge von Datenbits eine Folge von Wörtern umfaßt, von denen jedes aus $m$ Bits besteht, einschließlich $m$ Daten- und Paritätsbits, und bei welchem die vorbestimmte Zahl kleiner als $m$ ist.

4. System nach Anspruch 1, bei welchem der Sender eine Anzahl von Einheiten (11, 14) umfaßt, von denen jede eine Quelle von zu sendenden Daten sein kann, eine Anzahl von Sendecodekonvertern, die mit entsprechenden Quelleneinheiten verbunden sind und jeweils aufgrund effektiver Daten während einer gesamten Periode tätig werden können, während welcher effektive Daten von der Quelleneinheit, die mit dem betreffenden Konverter verbunden ist, gesendet werden sollen, um eine solche Codeumwandlung von spezifischen Datenbitsequenzen zu konvertierten Datenbitsequenzen zu bewirken, wann immer solche spezifische Datenbitsequenzen in den effektiven Daten auftreten, vor Sendung der effektiven Daten,

einen Multiplexer (25) zur Anordnung der Daten von den entsprechenden Quelleneinheiten (11, 14) im Zeitmultiplex,

und einen Modulator (24), zum Modulieren des Trägers mit den Multiplexdaten von dem Multiplexer (25),

und bei welchem der Empfänger einen Demodulator (42) zum Demodulieren der von dem Träger empfangenen Daten umfaßt, Verteilungseinrichtungen (47) zum Demultiplexen von Daten, welche von den jeweiligen Quelleneinheiten (11, 14) empfangen werden,

einer Anzahl von Detektoren, die mit dem Demultiplexer (47) verbunden sind, um von den jeweiligen Quelleneinheiten (11, 14) Daten zu empfangen und jeweils tätig zu werden, in Relation zu den empfangenen, demodulierten und demultiplexierten Daten von der betreffenden Quelleneinheit (11, 14), um solche Codeumwandlungen festzustellen, um zu bestimmen, daß effektive Daten von der betreffenden Quelleneinheit empfangen werden sollen,

eine Anzahl von Empfangscodekonvertern, die mit den Demultiplexern (47) verbunden sind, zum Empfang von Daten von jeweiligen Quelleneinheiten (11, 14), welche jeweils in bezug auf empfangene, demodulierte und demultiplexierte Daten von der betreffenden Quelleneinheit (11, 14) tätig werden, um die konvertierten Datenbitsequenzen zu den spezifischen Datenbitsequenzen wiederherzustellen, von welchen sie abgeleitet worden waren,

und eine Anzahl von Bestimmungseinheiten (51, 54), von denen jede eine Bestimmungseinheit für Daten sein kann, die zum Empfang der wiederhergestellten Daten von den jeweiligen Quelleneinheiten angeschlossen sind.

5. Verfahren zum Übertragen von Daten durch ein Datenübertragungssystem, mit einem Sender, der eine Sendeeinrichtung (1) umfaßt, die dazu dient, Daten zu senden, die aus einer Reihe von Datenbits bestehen, die eine Folge von Wörtern umfaßt, und die dazu dient, ein Sendeanforderungssignal zu erzeugen, um anzuzeigen, daß effektive Sendedaten gesendet werden, und einen Modulator (2) zum Modulieren der Sendedaten auf einen Träger zur Übertragung, wenn das Sendeanforderungssignal anzeigt, daß effektive Daten gesendet werden sollen, und einen Empfänger, der zum Empfang der Sendung von dem Sender eingerichtet ist und einen Demodulator (4) umfaßt, der dazu dient, solche Sendungen zu demodulieren, um demodulierte Daten zu liefern, die den Sendedaten entsprechen, dadurch gekennzeichnet,

daß der Sender kontinuierlich den Träger sendet, unabhängig davon, ob effektive Daten von dem Sender zu dem Empfänger gesendet werden sollen,

in zeitlicher Koinzidenz mit dem Moment der anfänglichen Entwicklung des Sendeanforderungssignals die Polarität eines zu sendenden Datenbits invertiert wird,

während einer Zeitperiode, während welcher effektive Daten gesendet werden sollen, eine

Codeumwandlung von spezifischen Datenbitsequenzen bewirkt wird, um spezifische Datenbitsequenzen in konvertierte Datenbitsequenzen umzuwandeln, durch Invertierung des Wertes eines Datenbits, welches in solch einer spezifischen Datenbitsequenz unmittelbar nach einer vorbestimmten Anzahl von aufeinanderfolgenden Datenbits, die alle einen vorbestimmten Wert haben, folgt, wann immer solche Datenbitsequenzen in den effektiven Daten auftreten, vor Sendung der effektiven Daten, und daß

bei Empfang solche Umwandlungen in den empfangenen, demodulierten Daten festgestellt werden, um zu bestimmen, daß effektive Daten empfangen werden sollen, und

konvertierte Datenbitsequenzen zu den spezifischen Datenbitsequenzen, von denen sie abgeleitet worden waren, wiederhergestellt werden, wenn das Empfangssignal empfangen werden soll.

## Revendications

1. Système de transmission de données comportant un émetteur qui comprend un équipement terminal d'émission (1) ayant pour fonction de produire des données d'émission consistant en une série de bits de données formant une succession de mots, et de produire un signal de demande d'émission pour indiquer que des données d'émission éffectives doivent être émises, et un modulateur (2) pour moduler les données d'émission sur une porteuse pour leur transmission quand le signal de demande d'émission indique que des données effectives doivent être émises, et un récepteur agencé pour recevoir des émissions de l'émetteur, comprenant un démodulateur (4) destiné à démoduler ces émissions pour produire des données démodulées correspondant aux données d'émission, caractérisé en ce que l'émetteur émet continuellement ladite porteuse, que des données effectives soient à émettre ou non de l'émetteur vers le récepteur-et comprenant un convertisseur de code d'émission (22) qui, en coïncidence dans le temps avec le moment du développement initial du signal de demande d'émission, inverse la polarité d'un bit de données et qui, sur des données effectives dans une période dans laquelle des données effectives doivent être émises, effectue une conversion de codes de séquences spécifiques de bits de données en des séquences converties de bits de données, en inversant la valeur d'un bit de données qui suit, dans cette séquence spécifique de bits de données, immédiatement un nombre prédéterminé de bits consécutifs de données, tous d'une valeur donnée, chaque fois que ces séquences spécifiques de bits de données apparaissent dans les données effectives avant l'émission des données effectives, et en ce que le récepteur comporte un détecteur (44, 45) qui, en relation avec des émissions démodulées reçues, détecte les inversions pour produire un signal de détection indiquant que des données effectives sont à recevoir, et un convertisseur de code de réception (44, 45) qui rétablit les séquences converties de bits de données dans les séquences spécifiques de bits de données à partir desquelles elles ont été dérivées lorsque le signal de détection est produit.

2. Système selon la revendication 1, dans lequel le récepteur comporte un autre détecteur (45, 452) destiné à maintenir un comptage de bits consécutifs de données reçues qui sont tous d'une valeur donnée avant le rétablissement des valeurs initiales des bits de données inversés, et pour déterminer que des données effectives ne doivent plus être reçues si et quand le comptage atteint un nombre prédéterminé indiquant que tous les bits de données reçus sur une période donnée ont été de la valeur donnée.

3. Système selon la revendication 1 Ou 2, dans lequel la série de bits de données constitue une succession de mots, chacun de m bits, comprenant m bits de données et des bits de parité et dans lequel le nombre prédéterminé est inférieur à m.

4. Système selon la revendication 1, dans lequek l'émetteur comporte plusiurs unités (11, 14) dont chacune peut être une source de données à émettre, plusieurs convertisseurs de codes de transmission connectés aux unités de sources respectives de fonctionnant chacun sur des données effectives pendant une période dans laquelle les données effectives doivent être émises par l'unité de source connectée au convertisseur concerné, effectue cette conversion de code de séquences spécifiques de bits de données en des séquences converties de bits de données lorsque ces séquences spécifiques de bits de données apparaissent dans les données effectives avant d'émettre les données effectives, un multiplexeur (25) pour le multiplexage en division temporelle de données provenant des unités de source respectives (11, 14) et un modulateur (24) destiné à moduler la porteuse avec les données multiplexées provenant du multiplexeur (25), et dans lequel le récepteur comporte un démodulateur (42) pour démoduler des données reçues à partir de la porteuse, un dispositif de distribution (47) pour dé-multiplexer des données reçues provenant des unités de source respectives (11, 14), plusieurs détecteurs connectés avec le démultiplexeur (47) pour recevoir des données provenant des unités de source respectives (11, 14) et ayant chacun pour fonction, en relation avec les données reçues démodulées et démultiplexées provenant de l'unité de source (11, 14) concernée, de détecter cette conversion de code pour déterminer que des données effectives doivent être reçues de l'unité de source (11, 14) concernée, plusieurs convertisseurs de code de réception connectés au démultiplexeur (47) pour recevoir des données des unités de source respectives (11, 14) ayant chacun pour fonction, par rapport aux données reçues démodulées et démultiplexées pouvenant de l'unité de source (11, 14) concernée, de rétablir les séquences converties de bits de données dans les séquences spécifiques de bits de données à partir desquelles elles ont été dérivées et plusieurs unités de destination (51, 54) dont chacune peut être une destination des données, et connectée pour recevoir des données rétablies provenant des unités de source respectives (11, 14).

5. Procédé pour faire passer des données par un système de transmission de données comportant un émetteur comprenant un équipement terminal d'émission (1) ayant pour fonction de produire des données d'émission consistant en une série de bits de données formant une succession de mots, et de produire un signal de demande d'émission pour indiquer que des données d'émission effectives doivent être émises et un modulateur (2) pour moduler les données d'émission sur une porteuse pour leur transmission quand le signal de demande d'émission indique que des données effectives peuvent être émises et un récepteur agencé pour recevoir des émissions de l'émetteur, comprenant un démodulateur (4) destiné à démoduler ces émissions pour produire des données démodulées correspondant aux données d'émission, le procédé étant caractérisé en ce que l'émetteur émet continuellement la porteuse, que des données effectives doivent être émises ou non de l'émetteur vers le récepteur, qu'en coïncidence temporelle avec le moment du développement initial du signal de demande d'émission, la polarité d'un bit de données à émettre est inversée, que pendant une période dans laquelle des données effectives doivent être émises, une conversion de code de séquences spécifiques de bits de données est effectuée pour convertir les séquences spécifiques de bits de données en des séquences converties de bits de données en inversant la valeur d'un bit de données qui suit, dans une séquence spécifique de bits de données immédiatement un nombre prédéterminé de bits consécutifs de données ayant tous une valeur donnée, lorsque ces séquences spécifiques de bits de données apparaissent dans les données effectives avnt l'émission des données effectives et en ce que, à la réception, ces inversions sont détectées dans les données démodulées reçues pour déterminer que des données effectives peuvent être reçues et que des séquences converties de bits de données sont rétablies en des séquences spécifiques de bits de données à partir desquelles elles ont été dérivées quand le signal de détection doit être reçu.

FIG. I.

FIG. 5.

*FIG. 2.*

(a) — (CARRIER SIGNAL)

(b) — (REQUEST OF SEND SIGNAL)

(c) ALL MARK | EFFECTIVE DATA | ALL MARK — (SEND DATA)

(d) ALL MARK | SPACE | CONVERTED DATA | ALL MARK — (DEMODULATED DATA)

(e) — (CARRIER DETECT SIGNAL)

(f) — (RECEIVE DATA)

FIG. 3.

FIG. 3A.

FIG. 3B.

0015730

Fig. 4.

TERMINAL — 11

TERMINAL — 14

2 — 2A1 INPUT PORT

2A4 INPUT PORT

1RS / 1SD

4RS / 4SD

25 MULTIPLEXER

24 MODULATING CIRCUIT

3

TERMINAL — 51

TERMINAL — 54

OUTPUT PORT — 4A1

OUTPUT PORT — 4A4

1CD / 1RD

4CD / 4RD — 4

47 MULTIPLEXER

42 DEMODULATING CIRCUIT

RD / RT